# EUROPEAN PATENT APPLICATION

(11) **EP 4 835 417 A1**
(43) Date of publication of application: **04.11.2026**
(21) Application number: 24916976.4
(22) Date of filing: 29.11.2024
(51) Int. Cl.: G01J 4/04

(54) **CALIBRATION SAMPLE HOLDER, AND METHOD FOR CALIBRATING POLARIZATION MEASURING DEVICE EMPLOYING SAME**

(30) Priority: 11.01.2024 JP 2024002570
(71) Applicant: JASCO Corporation, Hachioji-shi Tokyo 192-8537 (JP)
(72) Inventor: GOTO, Yutaro, Hachioji-shi, Tokyo 192-8537 (JP); YAMADA, Atsushi, Hachioji-shi, Tokyo 192-8537 (JP); KONDO, Yoshiro, Hachioji-shi, Tokyo 192-8537 (JP); YAMANE, Ai, Hachioji-shi, Tokyo 192-8537 (JP)
(74) Representative: Henkel & Partner mbB
(86) International application number: PCT/JP2024/042431
(87) International publication number: WO 2025/150291

(57) **Abstract**

A calibration sample holder 10 for a polarization measuring device comprises: a cylindrical holder body 5; fixing means 1, 2, 3 for fixing a calibration sample 4 that exhibits optical anisotropy on a central axis inside the holder body 5; and the calibration sample 4. At least one part 5A, 5B of the outer periphery of the holder body 5 has an outer diameter larger than that of other parts, and has an axisymmetric regular polygonal cross-sectional shape. The holder body 5 is configured to be capable of being installed on a V-shaped block provided in the polarization measuring device, such that the center of the optical path of polarized light in the polarization measuring device coincides with the central axis of the holder body 5. The V-shaped block has the same opening angle as the angle formed by two sides of the axisymmetric regular polygon, and the holder body 5 is configured to be capable of being installed on the V-shaped block at a plurality of installation angles. A calibration value is assigned to the calibration sample 4 for each installation angle of the holder body 5.

## Description

### Related Application

This application claims the priority of Japanese Patent Application No. 2024-002570 filed on January 11, 2024, the disclosure of which is incorporated herein by reference in its entirety.

### Technical Field

The present invention relates to calibration of a polarization measuring apparatus.

### Background Art

There are various apparatuses for measuring polarization properties of a sample, and a technique capable of calibrating such polarization measuring apparatuses properly and easily has been demanded.

Patent Literature 1 discloses a cylindrical liquid cell for a polarimeter, which is one of the polarization measuring apparatuses. Since such a cylindrical cell is generally used in polarimeters, a sample for calibration (a quartz plate, etc.) is attached to a cylindrical holder having the same outer shape as the cylindrical cell, so that the cylindrical holder for calibration can be installed in a sample chamber like the cylindrical cell upon calibration of the polarimeter.

Moreover, Patent Literature 2 discloses a cylindrical holder that incorporates a quartz plate for calibration. The quartz plate inside the holder has its angle of optical rotation assigned in advance by a polarimeter with high accuracy. When the polarimeter is calibrated by using such cylindrical holder, an installation angle of the quartz plate at the time of valuation needs to be reproduced correctly to avoid optical defects present in the quartz plate. In Patent Literature 2, the shape of the cylindrical holder is utilized such that the cylindrical holder can be installed in the sample chamber of the polarimeter at various angles around its axis. Since the angle of optical rotation for each installation angle can be measured, the installation angle that is the closest to the angle at the time of valuation can be found to perform calibration at that installation angle.

### Citation List

### Patent Literature

Patent Literature 1: Japanese Unexamined Patent Application Publication No. 2007-33460 A
Patent Literature 2: International Patent Publication No. WO2017/108034 A

### Summary of Invention

### Technical Problem

Calibration of the polarization measuring apparatus, however, is not performed only once, and it is repeated periodically or as necessary. Therefore, when calibration is performed by installing the cylindrical holder that can be acquired from Patent Literature 1 on a V-shaped block in the sample chamber, the installation angle of the cylindrical holder relative to the V-shaped block is not determined and changes each time it is installed. Moreover, in the calibration method shown in Patent Literature 2, although measurement at multiple installation angles can be performed easily by utilizing the shape of the cylindrical holder, measurement needs to be performed at multiple installation angles each time calibration is performed to reproduce the installation angle of the quartz plate at the time of valuation, which is time-consuming. That is, the contents shown in Patent Literatures 1 and 2 leave a room for consideration in reproducibility of the installation angle of a calibration sample (a quartz plate) fixed to the cylindrical holder.

The object of the present invention is to provide a calibration sample holder that is excellent in reproducibility of an installation angle. Moreover, it is to provide a calibration sample holder that facilitates measurement of polarization property values of a calibration sample at each angle by changing the installation angle of the calibration sample holder in multiple ways, and that facilitates comparison between the measured polarization property value and a polarization property value that is assigned in advance for each installation angle (may also be referred to as a calibration value herein). In addition, it is to provide a method for calibrating a polarization measuring apparatus using the same.

### Solution to Problem

That is, a calibration sample holder according to the present invention is a calibration sample holder for a polarization measuring apparatus comprising:
a tubular holder main body;
a fixture that fixes a calibration sample showing optical anisotropy on a central axis of the holder main body inside the holder main body; and
the calibration sample,
wherein at least one portion of an outer periphery of the holder main body has a larger outer diameter than other portions, and has a cross-sectional shape of an axisymmetric regular polygon,
the holder main body is configured to be capable of being installed on a V-shaped block provided to the polarization measuring apparatus such that a center of an optical path of polarized light of the polarization measuring apparatus and the central axis of the holder main body coincide; wherein the V-shaped block has an opening angle which is the same as an angle formed by two sides of the axisymmetric regular polygon, and the holder main body is configured to be installed on the V-shaped block at multiple installation angles, and
the calibration sample has calibration values, a respective one of the calibration values being assigned for each installation angle of the holder main body.

Moreover, two portions having the cross-sectional shape of the axisymmetric regular polygon are formed at two different positions along the central axis of the holder main body.

Next, a calibration method of a polarization measuring apparatus according to the present invention comprises steps of:
using a tubular holder main body of which at least one portion of an outer periphery has a larger outer diameter than other portions and has a cross-sectional shape of an axisymmetric regular polygon to use a calibration sample showing optical anisotropy that is fixed inside the holder main body such that it is positioned on a central axis of the holder main body;
arranging a V-shaped block having an opening angle which is the same as an angle formed by two sides of the axisymmetric regular polygon along an optical path of polarized light that is measurement light of the polarization measuring apparatus;
installing the holder main body on the V-shaped block at a predetermined installation angle such that a center of the optical path of the polarized light and the central axis of the holder main body coincide;
measuring a polarization property value of the calibration sample; and
wherein the holder main body is configured to be capable of being installed on the V-shaped block at multiple installation angles, a calibration value is assigned to the calibration sample for each installation angle of the holder main body, and the measured polarization property value and the calibration value corresponding to the predetermined installation angle are compared.

Furthermore, in the measuring the polarization property value, the polarization property values of the calibration sample at multiple installation angles are preferably measured by installing the holder main body on the V-shaped block at installation angles different from the predetermined installation angle.

### Advantageous Effects of Invention

According to the above-described configuration of the calibration sample holder, a calibration sample holder that is excellent in reproducing the installation angle on the V-shaped block can be acquired, and reliability of analysis results of a polarization measuring apparatus that is calibrated by using this holder can be improved. In addition, by setting the same calibration sample at multiple distinct installation angles, detailed calibration using calibration values at multiple installation angles can be performed, and reliability of the analysis results of the polarization measuring apparatus can be improved further.

Moreover, according to the above-described calibration method, the calibration sample can be installed on the V-shaped block with good reproducibility of the installation angle, and reliability of the analysis results of the polarization measuring apparatus can be improved. In addition, detailed calibration using calibration values of the calibration sample at multiple distinct installation angles can be performed, and a polarization measuring apparatus with excellent reliability of the analysis results can be provided.

### Brief Description of Drawings

Figure 1 is an exploded view of a calibration sample holder according to an embodiment of the present invention.
Figure 2 is a cross-sectional view of the calibration sample holder.
Figure 3A to 3F are six views of the calibration sample holder.
Figure 4 is a perspective view showing a usage example of the calibration sample holder.
Figure 5 is a side view of an incident side showing a usage example of the calibration sample holder.
Figure 6 is a diagram of an apparatus configuration when a polarimeter is calibrated by the calibration sample holder.

### Description of Embodiments

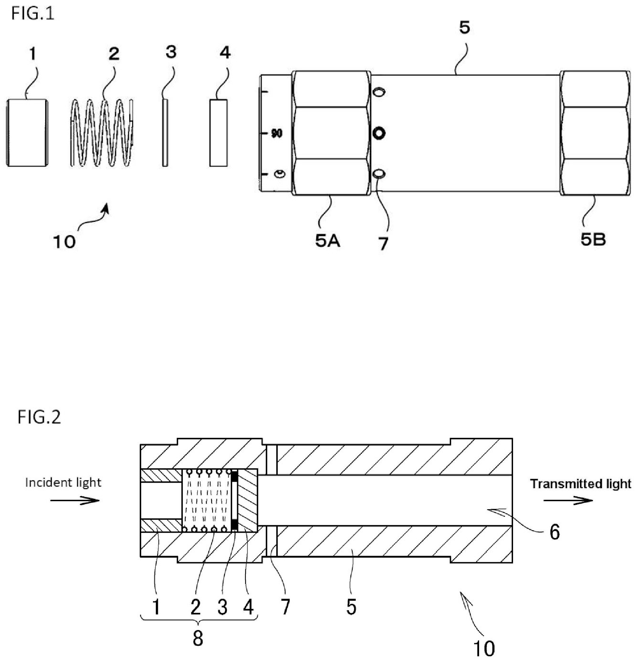

In the following, an embodiment of a calibration sample holder according to the present invention is described with reference to the drawings. As shown in the exploded view of Figure 1, a calibration sample holder 10 has a spring retainer 1, a coil spring 2, a spacer 3, a calibration sample 4, and a holder main body 5. Here, the spring retainer 1, the coil spring 2, and the spacer 3 configure a fixture 8 for fixing the calibration sample 4 to the holder main body 5.

The calibration sample 4 is an optical element having optical anisotropy, and a calibration value is defined for the calibration sample 4 as a measure of the optical anisotropy. For example, on the calibration sample 4 for a polarimeter, optical rotations (α^{t}_{λ}: λ represents a wavelength, t represents temperature, and the unit is degrees) that are traceable to an international standard are assigned in advance as calibration values. The shape of the calibration sample 4 is not limited, and it is mainly disk-shaped, square plate-shaped, and other regular polygon plate-shaped, in general.

The calibration sample holder 10 can be applied not only to the calibration sample 4 for optical rotation measurement, but also to calibration samples for circular dichroism measurement, linear dichroism measurement, birefringence measurement, polarization transmission measurement, polarization reflection measurement, polarization Raman measurement (this indicates measurement of polarization direction dependence of Raman scattering intensity), and polarization microscopic measurement.

Specific examples of the calibration sample 4 include standard samples such as a polarization plate and a wavelength phase plate. A linear polarization plate, which is one type of a polarization plate, is an optical element of which a vibration direction of transmitted linearly polarized light is constant. Moreover, a 1/4 wavelength phase plate, which is one type of a wavelength phase plate, is an optical element that has two perpendicular main axes, and generates a phase difference of 1/4 wavelength between polarization components in the respective main axis directions.

Moreover, examples of the polarization measuring apparatus to which the calibration sample holder 10 can be applied include a circular dichroism spectrometer, a linear dichroism spectrometer, a birefringence measuring apparatus, an infrared spectrometer, a Raman spectrometer, and a UV-visible-NIR spectrometer.

The holder main body 5 has a tubular shape as a whole, and has a through hole 6 along its central axis. One end of the through hole 6 is an incident side, and the other is an exit side. To describe the shape along the central axis of the holder main body 5 in detail, there is a cylindrical portion at the end on the incident side, and there is a regular octagonal tubular portion 5A having a larger outer diameter than the cylindrical portion on the exit side. On the exit side of this regular octagonal tubular portion 5A, there is a slightly long cylindrical portion which has a same outer diameter as the cylindrical portion on the incident side. On the exit side thereof, there is a regular octagonal tubular portion 5B again, and it has a diameter that is the same as the regular-octagonal tubular portion 5A on the incident side, and forms an end of the exit side. That is, regular octagonal tubular portions 5A, 5B having an external shape of which eight planes are aligned along the outer periphery are provided at two positions along the central axis of the holder main body 5, and cross-sectional shapes of both the regular octagonal tubular portions 5A, 5B perpendicular to the central axis are regular octagons of the same size. The cross-sectional shape is not limited to a regular octagon, and is a cross-sectional shape of a regular polygon of which the number of sides is an even number of four or greater. Examples of cross-sectional shapes include axisymmetric regular polygons such as a square, a regular hexagon, a regular dodecagon, and a regular hexadecagon.

On the cylindrical portion on the incident side, scales are engraved at intervals of 45 degrees along the outer periphery. Numbers of "-90" degrees, "0" degrees, and "90" degrees are engraved near the scales that correspond to respective installation angles. Moreover, on the cylindrical portion between the regular octagonal tubular portions 5A, 5B, eight thermometer insertion ports 7 are aligned along an outer periphery direction. Upon calibration, temperature inside the holder main body 5 is measured by inserting a thermometer into any of the insertion ports 7. The insertion port 7 is formed at each installation angle such that temperature can be measured equally regardless of the installation angle of the holder main body 5.

A state when the calibration sample 4 is attached to the calibration sample holder 10 is shown in a cross-sectional view of Figure 2. As shown in Figure 2, the through hole 6 of the holder main body 5 has different cross-sectional shapes on the incident side and the exit side. In the example of Figure 2, the cross-sectional shapes of the through hole 6 on the incident side and the exit side are circular, but an inner diameter of the cross-sectional shape is smaller on the exit side than on the incident side. All of the disk-shaped calibration sample 4, the ring-shaped spacer 3, the coil spring 2 and the spring retainer 1 have approximately the same outer diameter as the inner diameter of the through hole 6 of the incident side. The disk-shaped calibration sample 4, the ring-shaped spacer 3, the coil spring 2 and the spring retainer 1 are inserted into the through hole 6 from the incident side in that order. The spring retainer 1 has a cylindrical shape, and is a screw-in type to the through hole 6 of the incident side. By screwing the spring retainer 1, the coil spring 2 is compressed, and a repulsion force of the coil spring 2 acts on the calibration sample 4 via the spacer 3, so that the calibration sample 4 is fixed in the holder main body 5.

Here, the cross-sectional shape of the through hole 6 of the incident side may be determined depending on the shape of the calibration sample 4. For example, when the external shape of the calibration sample 4 is not circular, but a square, the cross-sectional shape of the through hole 6 of the incident side may be formed as a square.

The spring retainer 1 is not limited to the screw-in type, and may be made of rubber. By fitting the spring retainer 1 made of rubber into the through hole 6 of the incident side, the coil spring 2 is compressed, so that the calibration sample 4 is fixed in the holder main body 5.

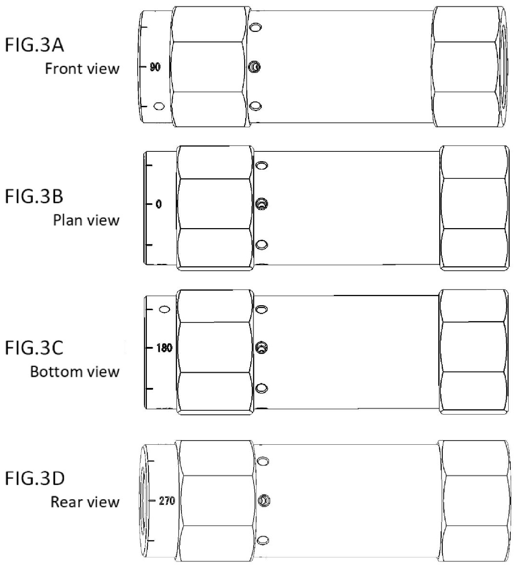

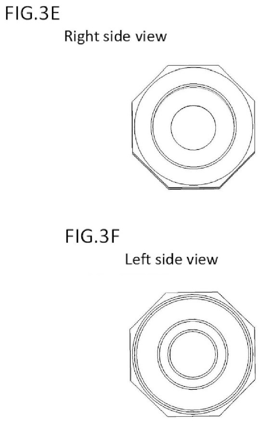

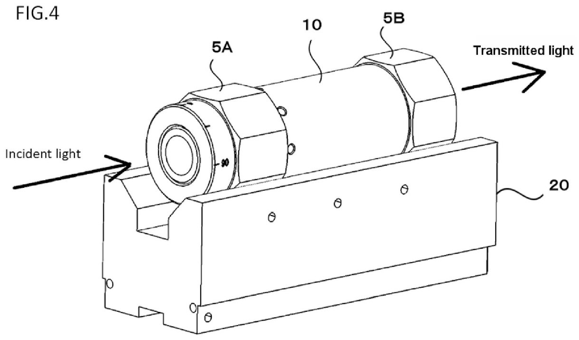

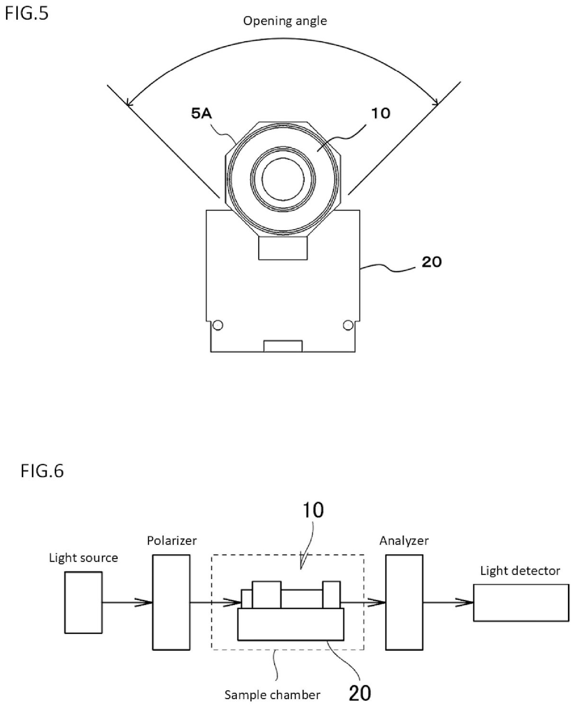

Figure 3A to 3F are six views (front view, plan view, bottom view, rear view, right side view and left side view) of the calibration sample holder 10 of the present embodiment. Moreover, the calibration method using the calibration sample holder 10 is described with reference to Figure 4 and Figure 5.
(1) The calibration sample holder 10 is installed on the V-shaped block 20 arranged in a sample chamber of the polarimeter having a configuration of Figure 6, for example. When the calibration sample holder 10 has the regular octagonal tubular portions 5A, 5B, an opening angle of the V-shaped block 20 is set to 90 degrees (see Figure 5). The V-shaped block 20 having the opening angle depending on the shape of the axisymmetric regular polygon is used, such as setting the opening angle to 60 degrees when a regular hexagonal tubular portion is used. Accordingly, even when the calibration sample holder 10 is installed at any posture, two inclined surfaces of the V-shaped block 20 and the two surfaces that form the outer peripheries of the regular octagonal tubular portions 5A, 5B of the holder main body 5 come into contact, so that the installation angle of the calibration sample 4 in the calibration sample holder 10 is determined. Here, the two surfaces that form the outer periphery intersect at 90 degrees (see Figure 5).
(2) When the calibration sample holder 10 is installed on the V-shaped block 20, the scale at the top is read out from the scales of the cylindrical portion on the incident side of the holder main body 5, and is recorded as necessary. Accordingly, the user can confirm the installation angle of the calibration sample 4 retained in the calibration sample holder 10 based on the read-out value of the scale. The installation angle is 0 degrees in Figure 4. Moreover, other than the method of reading out the scale by the user himself/herself, a mechanism of making the polarimeter automatically read out the scale of the calibration sample holder 10 disposed in the sample chamber by using a well-known technique such as image recognition, and automatically record the installation angle of the calibration sample 4 based on the read-out value of the scale together with a measurement value (optical rotation) may be provided.
(3) To avoid fluctuation of optical rotation with temperature of the calibration sample 4, a temperature control means (e.g., a temperature control apparatus using a Peltier element) installed to the V-shaped block 20 is used to maintain the temperature of the calibration sample 4 in the calibration sample holder 10 at a predetermined temperature, and the polarimeter is operated to measure optical rotation of the calibration sample 4. Then, the measurement value of optical rotation and the calibration value (optical rotation) assigned to the calibration sample 4 in advance are compared to perform calibration of the polarimeter. A temperature measurement value of the calibration sample 4 may be recorded together with the above-described installation angle and the measurement value (optical rotation).
   In a case of the polarimeter, an emission line (D line) of a sodium lamp, for example, is used as source light, and the linearly polarized light taken out from the emission line by a polarizer in front of the sample chamber is guided to the through hole on the incident side of the calibration sample holder 10 installed in the sample chamber, and optical rotation of the calibration sample 4 can be measured.
(4) The installation angle of the calibration sample holder 10 is changed to measure optical rotation values of the calibration sample 4 at multiple installation angles. Then, the measurement values of optical rotation at each installation angle and the calibration values (optical rotation) at each installation angle assigned to the calibration sample 4 are compared, so that calibration of the polarimeter can be performed in detail. A temperature measurement value, an installation angle, and a measurement value (optical rotation) of the calibration sample 4 may be recorded together for each installation angle.

In the above-described calibration method, the calibration sample holder 10 is installed on the V-shaped block 20 in different postures at 45-degree intervals around the central axis of the calibration sample holder 10 (at eight installation angles from -180 degrees to +180 degrees). Accordingly, the user can reproduce the installation angle of the calibration sample 4 fixed in the calibration sample holder 10 easily. That is, by reading out and recording the installation angle of the calibration sample 4 based on the scale (angle) of the holder main body 5 (or defining the installation angle to be a constant angle) when the same calibration sample holder 10 was used to perform calibration previously, the calibration sample 4 can be installed at the same installation angle easily in the next calibration. Or, instead of the same installation angle, selecting a desired posture from different postures of 45-degree intervals, and installing the calibration sample 4 at the installation angle according to the selected posture are easily accomplished.

In conventional cylindrical holders, the installation angle of the calibration sample 4 is often unclear when calibration is performed. Without the direction of the calibration sample 4 being clear, the installation angle of the cylindrical holder is changed in multiple ways, and a mean value or a median of the measurement values measured at each installation angle is acquired. Or, when deviation of the measurement values at multiple installation angles is within a predetermined range, a representative value thereof is acquired. Since the value acquired in such a way and the calibration value of the calibration sample 4 are compared, reproducibility of the installation angle for the calibration sample 4 could not be achieved in the next calibration. On the other hand, when using the calibration sample holder 10 of the present embodiment as described above, a predetermined installation angle is selected from multiple distinct installation angles, and optical rotation of the calibration sample 4 can be measured at the installation angle that can be identified uniquely after the calibration, so that the installation angle of the calibration sample 4 can be reproduced accurately in the next calibration. Therefore, an appropriate calibration can be performed to the polarimeter, and reliability of the analysis results of the polarimeter can be improved. In addition, by setting the same calibration sample 4 at multiple installation angles of which the angles are clear, a detailed calibration using the calibration values that are assigned in advance at the multiple installation angles can be performed, and reliability of the analysis results of the polarization measuring apparatus can be improved further.

In particular, in optical rotation measurement, circular dichroism measurement, linear dichroism measurement, birefringence measurement, polarization transmission measurement, polarization reflection measurement, polarization Raman measurement, and polarization microscopic measurement that measure polarization properties of a sample, the installation angle of the sample largely affects the measurement result, so that reproducibility of the installation angle of the calibration sample 4 is very important. Reliability of the analysis results of these polarization measuring apparatuses can be improved by using the calibration sample holder 10 of the present embodiment.

Moreover, in a case of a conventional cylindrical holder, the cylindrical holder has line contact with the V-shaped block 20, so that the contact area between the cylindrical holder and the V-shaped block 20 is small. On the other hand, the calibration sample holder 10 of the present embodiment has surface contact with the V-shaped block 20, so that the contact area between the calibration sample holder 10 and the V-shaped block 20 is larger. This results in the advantages of improving heat transfer efficiency when controlling temperature, and eliminating influence of vibration.

For example, when a Peltier element is installed to the V-shaped block 20, and temperature of the calibration sample 4 in the calibration sample holder 10 is controlled via the V-shaped block 20, it is easier to control temperature of the calibration sample holder 10 by surface contact than line contact.

Moreover, when vibration from outside the apparatus (for example, vibration generated by people or objects contacting the apparatus, or vibration transferred from devices such as a dehumidifier or a chiller nearby) is applied to the calibration sample 4 in the calibration sample holder 10, vibration is less likely to be generated in the calibration sample holder 10 by surface contact than line contact, and an effect of suppressing generation of vibration can be achieved.

Moreover, in a case of a conventional cylindrical holder, the calibration step could only be performed by complex operations, but with the calibration sample holder 10, the calibration step can be performed by a simple workflow. The reason is that the installation angle of the calibration sample 4 can be easily changed. Therefore, a more detailed calibration can be performed within a realistic operation time.

Moreover, the calibration sample holder 10 of the present embodiment can be utilized in polarization measurement of a sample by fixing the sample, which is a measurement target, instead of the calibration sample 4.

A specific example of which a detailed calibration can be performed by setting the calibration sample holder 10 of the present embodiment at multiple installation angles to calibrate the polarimeter at each installation angle is described below.

First, an acceptable range is that the measured optical rotation value of a standard sample which is a calibration sample, is within the following range. 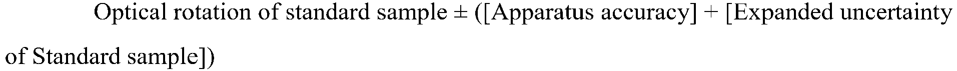 Optical rotation of standard sample ± ([Apparatus accuracy] + [Expanded uncertainty of Standard sample])

Here, the apparatus accuracy is a value that depends on performance of the apparatus, and the apparatus accuracy is set to 0.2% of optical rotation, for example. When optical rotation of the standard sample is 17.000°, the apparatus accuracy is 17.000 x 0.2% = 0.034°.

Moreover, the expanded uncertainty of the standard sample is a value that represents deviation of values of optical rotation, and the expanded uncertainty is indicated in a calibration certificate of the standard sample (i.e., an optical rotation plate). Here, the expanded uncertainty of the standard sample is regarded as zero to simplify explanation.

Four items used for calibration are the polarimeter, the thermometer (for measuring temperature of the standard sample), the assigned standard sample, and the calibration sample holder of the present embodiment.

The standard sample (i.e., the optical rotation plate) is installed in the calibration sample holder at all times, and is not taken out from the calibration sample holder. Accordingly, the relationship between the standard sample and the installation angle of the calibration sample holder does not change, and it is "the installation angle of the holder = the angle of the standard sample". Optical rotation values which are assigned at a wavelength of 589 nm at each installation angle and the acceptable ranges are as in the following table, for example.

**[Table 1]**

| Installation angle (°) | Optical rotation of Standard sample (°) | Acceptable range (°) |
|---|---|---|
| 0 | 17.000 | 17.000±0.034 |
| 90 | 17.001 | 17.001±0.034 |
| 180 | 17.002 | 17.002±0.034 |
| 270 | 17.001 | 17.001±0.034 |

Steps (1) to (5) of calibration are shown below.
(1) Set a calibration sample holder that incorporates a standard sample to the polarimeter at an installation angle of 0°.
(2) Insert a thermometer into a thermometer insertion port.
(3) Confirm temperature of the standard sample, measure optical rotation at a wavelength of 589 nm when the temperature becomes 20±0.5°C, and record the optical rotation together with the temperature of the standard sample at that time.
(4) Correct the measurement value of optical rotation to optical rotation at a temperature of 20°C.
(5) It is accepted when the corrected optical rotation is within 17.000±0.034°.

When the above-described calibration steps are performed with a conventional cylindrical holder, the installation angle of the standard sample (i.e., the optical rotation plate) is not clear, so that "optical rotation of the standard sample" assigned in advance among the above acceptable ranges has a certain range. As a result, the calibration result may not be accepted even if the performance of the polarimeter would actually be accepted.

On the other hand, when the calibration sample holder having the cross-sectional shape of the axisymmetric regular polygon like the present embodiment is used, the installation angle of the standard sample is clear, so that performance of the polarimeter is reflected correctly in the calibration result. Furthermore, not only being simply accurate, but also valuation of the standard sample at each angle is possible, so that pieces of information that can be utilized for calibration for one standard sample can be increased. For example, when the calibration sample holder has a shape of a regular octagon, apparatus calibration at an installation angle of 0° is possible, and apparatus calibration is possible in eight ways in total at 45° intervals, like 45°, 90°, 135°, etc. The calibration is performed at only one installation angle of the calibration sample holder, but by performing measurement at other installation angles for reference data, apparatus calibration having a higher reliability can be performed.

### Reference Signs List

- 1: Spring retainer
- 2: Coil spring
- 3: Spacer
- 4: Calibration sample
- 5: Holder main body
- 5A, 5B: Regular octagonal tubular portion
- 6: Through hole
- 7: Thermometer insertion port
- 8: Fixture
- 10: Calibration sample holder
- 20: V-shaped block

## Claims

1. A calibration sample holder for a polarization measuring apparatus comprising:
a tubular holder main body;
a fixture that fixes a calibration sample showing optical anisotropy on a central axis of the holder main body inside the holder main body; and
the calibration sample,
wherein at least one portion of an outer periphery of the holder main body has a larger outer diameter than other portions, and has a cross-sectional shape of an axisymmetric regular polygon,
the holder main body is configured to be capable of being installed on a V-shaped block provided to the polarization measuring apparatus such that a center of an optical path of polarized light of the polarization measuring apparatus and the central axis of the holder main body coincide; wherein the V-shaped block has an opening angle which is the same as an angle formed by two sides of the axisymmetric regular polygon, and the holder main body is configured to be installed on the V-shaped block at multiple installation angles, and
the calibration sample has calibration values, a respective one of the calibration values being assigned for each installation angle of the holder main body.

2. The calibration sample holder of claim 1, wherein
two portions having the cross-sectional shape of the axisymmetric regular polygon are formed at two different positions along the central axis of the holder main body.

3. A calibration method of a polarization measuring apparatus comprising steps of:
using a tubular holder main body of which at least one portion of an outer periphery has a larger outer diameter than other portions and has a cross-sectional shape of an axisymmetric regular polygon to use a calibration sample showing optical anisotropy that is fixed inside the holder main body such that it is positioned on a central axis of the holder main body;
arranging a V-shaped block having an opening angle which is the same as an angle formed by two sides of the axisymmetric regular polygon along an optical path of polarized light that is measurement light of the polarization measuring apparatus;
installing the holder main body on the V-shaped block at a predetermined installation angle such that a center of the optical path of the polarized light and the central axis of the holder main body coincide;
measuring a polarization property value of the calibration sample; and
wherein the holder main body is configured to be capable of being installed on the V-shaped block at multiple installation angles, a calibration value is assigned to the calibration sample for each installation angle of the holder main body, and the measured polarization property value and the calibration value corresponding to the predetermined installation angle are compared.

4. The calibration method of claim 3, wherein,
in the measuring the polarization property value, the polarization property values of the calibration sample at multiple installation angles are measured by installing the holder main body on the V-shaped block at installation angles different from the predetermined installation angle.
